# EUROPEAN PATENT SPECIFICATION

(11) **EP 1 671 208 B1**
(45) Date of publication and mention of the grant of the patent: **29.07.2015**
(21) Application number: 04785048.2
(22) Date of filing: 23.09.2004
(51) Int. Cl.: H04W 60/00

(54) **METHOD AND APPARATUS FOR ROUTING MESSAGES IN A NETWORK**
VERFAHREN UND VORRICHTUNG ZUM ROUTEN VON NACHRICHTEN IN EINEM NETZWERK
METHODE ET APPAREIL POUR ROUTER DES MESSAGES DANS UN RESEAU

(30) Priority: 07.10.2003 US 680662
(43) Date of publication of application: 21.06.2006
(73) Proprietor: Motorola Mobility LLC, Libertyville, IL 60048 (US)
(72) Inventor: KUCHIBHOTLA, Ravi, Gurnee, IL 60031 (US); ANDERSEN, Niels, Peter, Skov, DK-4000 Roskilde (DK); HOWELL, Stephen, A., Gloucestershire GL4 3TQ (GB)
(74) Representative: Kuhnen & Wacker
(86) International application number: PCT/US2004/031502
(87) International publication number: WO 2005/038566

(56) References cited:
- EP-A- 1 096 728
- EP-A- 1 263 247
- WO-A-01/03463
- US-A1- 2002 193 139

## Description

### FIELD OF THE INVENTION

The present disclosure is directed to a method and an apparatus for routing messages in a network and more particularly to routing a message to a desired core network.

### BACKGROUND

EP 1 096 728 A2 shows a method for interfacing an asynchronous mobile communication system with at least one core network, a mobile communication system having a mobile station and a radio network, the method comprising the steps of a) at the radio network, discriminating an operating type of a core network(s) coupled thereto; b) at the radio network, generating and transmitting a system information message having core network operating type information and information related to the core network; c)if two or more core networks are coupled to the asynchronous mobile communication system; at the mobile station, selecting one core network to be communicated with, based on the system information message; d) operating a call control entity and a mobility management entity according to an operating type of the selected core network; and e) communicating messages between the mobile station and the radio network, the message having different data format according to the operating type of the selected core network. One embodiment shows an interface architecture of an asynchronous mobile station, an asynchronous radio network and two core networks each having a different operating type.

EP 1 263 247 A1 shows a radio communication network for multiple operator access comprising a radio communication access network (UTRAN) for the access of mobile network operators, each operating a core network (CN1, CN2, CN3). The radio communication access network (UTRAN) has at least one base station and connected distribution- and concentrator devices (CC, RNC1-RNC3) connecting the at least one base station with the central offices of the core networks. The radio communication access network (UTRAN) sends a set of network identifiers to mobile network users which are registered at the core networks as home user or as guest user. Home subscribers receive a network identifier according to their home networks and roaming subscribers receive the network identifier of their roaming networks. Based on the received network identifiers the preferred networks can be selected.

Presently, wireless communication systems in general include a radio access network (RAN) and a core network (CN). The access independent part of a network is known as the core network. In some mobile communication networks, the core network includes a mobile switching center, a packet data network and other network entities. In other types of networks, similar network entities are present and perform similar tasks such as routing calls, packet sessions, etc. User equipment also known as mobile stations (MS), access the network through the access dependent part of the network, known as access network (AN). In one type of wireless communication networks using radio frequency (RF) signals, the AN is known as the radio access network (RAN). The RAN includes a radio network controller (RNC) or base station controller (BSC) and base stations or Node Bs. The RAN manages the wireless communication links between the bases stations and the mobile stations. The CN receives messages from the public switched telephone network (PSTN), other mobile stations, and other core networks and core network entities and passes them to the mobile stations through the RAN.

In current networks, the RAN and the CN are configured such that one radio access network is connected to only one core network. This means that the RAN and the CN are able to use the same network identity or public land mobile network (PLMN) identity, where the PLMN identity is broadcast by the RAN and identifies the network, both the radio access network and the core network. The mobile station therefore only needs to select the RAN and a separate selection of the CN operator is unnecessary. However, messages cannot be directed from one RAN to any other service provider.

Emerging wireless communication technologies allow network operators to share resources. One example of network sharing is to share the radio access network resources by allowing multiple core networks operated typically by different service providers or operators to couple to the radio access network. The RAN is connected to the multiple core networks by a radio network controller (RNC). The radio network controller controls the radio resources, such as the bases stations. This allows multiple service providers to use one radio access network and the same limited number of frequency bands. However, the system cannot accommodate multiple system operators to ensure that the information from a MS is directed to the proper system operator or service provider. In the emerging universal mobile telephone system (UMTS), the routing of messages is either to a packet switched domain or circuit switched domain and not by system operator. Multiple service provider routing, or routing to the appropriate core network is not possible as there is only one system operator for both the radio network and the core network. In a shared RAN, multiple core network operators share the radio infrastructure and/or radio frequencies and thus messages must be routed to the proper core network as the RAN is now associated with multiple core network operators.

Thus, there is a need for a method of message routing where a plurality of core networks controlled by different operators is coupled to a single radio access network.

### BRIEF DESCRIPTION OF THE DRAWINGS

The preferred embodiments of the present invention will be described with reference to the following figures, wherein like numerals designate like elements, and wherein:
Fig. 1 is an exemplary diagram of a wireless communication system of the present invention;
FIG. 2 is an exemplary circuit block diagram of the present invention;
FIG. 3 is an exemplary flow chart illustrating messages routing of the present invention;

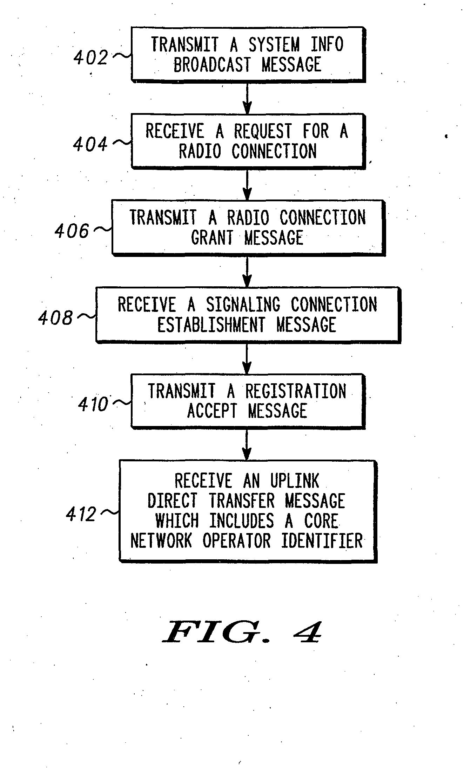

FIG. 4 is an exemplary flow chart illustrating messages routing of the present invention;
FIG. 5 is an exemplary flow chart illustrating messages routing of the present invention; and
FIG. 6 is an exemplary diagram of messages of the present invention.

### DETAILED DESCRIPTION OF THE DRAWINGS

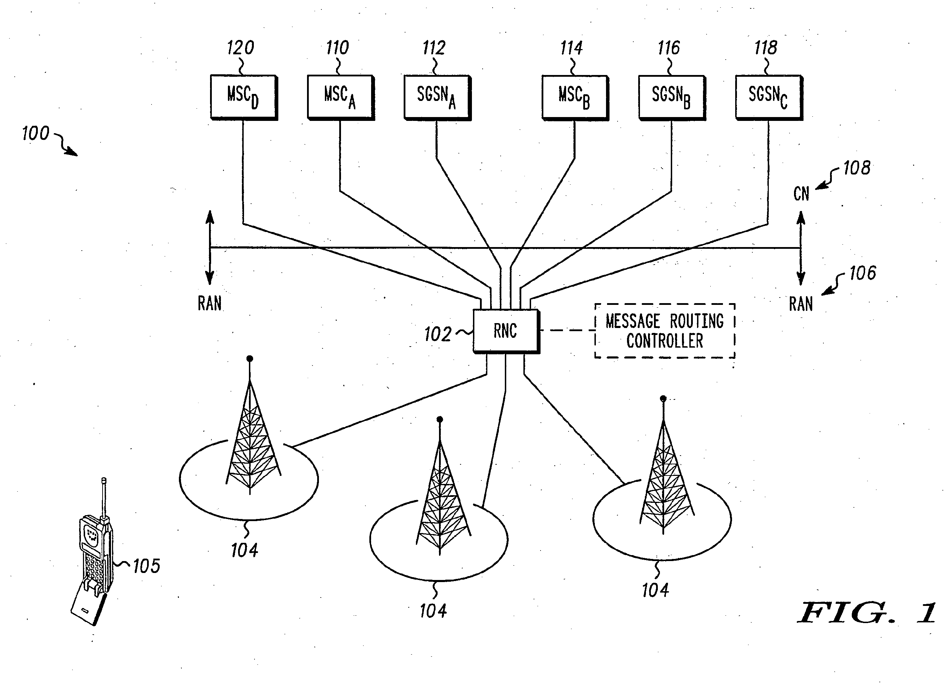

Fig. 1 is an exemplary diagram of a wireless communication system 100 according to the present invention. The system 100 includes a radio network controller (RNC) 102, at least one base station 104, and a mobile station (MS) 105. The radio network controller 102 may also be a base station controller (BSC) which is coupled to at least one transceiver such as a bases station 104 or wireless access point or the like. The RNC 102 and the base stations 104 form the radio access network (RAN) 106 portion of the system. Multiple core networks are connected to the radio access network 106. A first core network, which is coupled to the RAN 106, includes a mobile switching center (MSC), and a serving GPRS support node (SGSN). The core network (CN) 108 portion of the system, illustrated in FIG. 1, includes a first MSC 110 and a first SGSN 112 for a first service provider. A second core network includes a second MSC 114 and a second SGSN 116 for a second service provider. In the exemplary embodiment shown in FIG. 1, only two core networks are illustrated but it is understood by one skilled in the art that a plurality of core networks may be coupled to a RAN 106. In addition it should be noted that a wireless local area network can also form the radio access network, in which case a wireless local area network access point takes the place of the base station in the radio access network. The SGSN 112 may also be a packet data network or the like.

Although the embodiment illustrated in FIG. 1 shows a universal mobile telephone system (UMTS) network, the present invention may apply to other wireless communication systems such as code division multiple access (CDMA) systems, i.e. IS-95 related and cdma2000, global standard for mobile communication (GSM) and other time division multiple access systems, wireless local area networks (WLAN) systems or the like.

Mobile stations accessing the network through other wireless access networks such as through WLAN would use the WLAN access point similar to the RAN. WLAN currently operate under the 802.11 standards also known as WiFi but the access points are not limited to this technology. In this exemplary embodiment, the WLAN is coupled to multiple core networks. It can be a dedicated connection or through the internet or a combination thereof. The WLAN broadcasts the service set identifier (SSID) instead of a PLMNid. The SSID identifies an individual WLAN access point and the MS 105 will register to the core network(s) that the WLAN is connected to. The MS 105 will either receive a registration accept message or receive a list of sharing networks in the registration reject message or similar negotiation procedure. The list of allowed SSID may be something stored in the terminal or in the SIM or USIM or similar such application.

In FIG. 1, the MS 105 first attempts to form a communication link 118 with at least one of the base stations 104 of the RAN 106. The MS 105 in the exemplary embodiment is also configured to operate with at least one of the core network operators, typically the service provider from which the subscriber purchased the service. In current mobile networks, a MS 105 is programmed to tune to a certain predetermined frequency or set of frequencies. The core network operator, or service provider, through the RNC 102 and each base station 104, transmits a core network identifier or a public land mobile network identity (PLMNid) that identifies the core network. The PLMNid may include at least a mobile country code and a mobile network code, The core network identifier may identify the service provider associated with the core network. The MS 105 also has a list of PLMN identities (PLMNid's) of one or more preferred core network operators stored either in the MS 105 or on a SIM card (not shown) coupled to the MS 105. When the MS 105 receives a signal having the same PLMNid that matches a PLMNid that is stored in the MS memory or SIM, the MS 105attempts to connect to or register with the core network associated with the PLMNid selected. When the MS 105 finds a signal on a frequency with a PLMNid that is not stored in the MS 105 or SIM, it may attempt to connect to or register with the core network associated with the PLMNid. The MS 105 of the present invention may or may not have stored a matching PLMNid of that being broadcast by the RAN 106 and the MS 105 will attempt to register on the network identified by the PLMNid broadcast by the RAN 106.

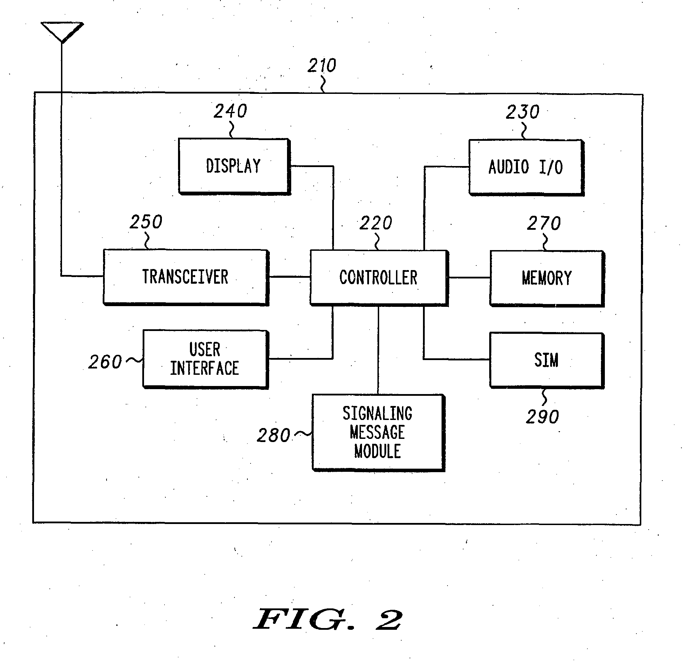

Fig. 2 is an exemplary block diagram of a MS 105, such as a UMTS terminal, according to one exemplary embodiment. The MS 105 may include a housing 210, a controller 220 coupled to the housing 210, audio input and output circuitry 230 coupled to the housing 210, a display 240 coupled to the housing 210, a transceiver 250 coupled to the housing 210, a user interface 260 coupled to the housing 210, and a memory 270 coupled to the housing 210. A signal message module 280 is coupled to the controller 220. The signal control module 280 may be hardware coupled to the controller 220 or software located in the memory 270 and executed by the controller 220. The memory 270 can include a core network operator ID or the list of core network operator identifiers may be stored in a subscriber identity module (SIM) 290 or Universal Subscriber Identity Module (USIM).

Continuing with FIG. 2, the display 240 can be a liquid crystal display (LCD), a light emitting diode (LED) display, a plasma display, or any other means for displaying information. The transceiver 250 may include a transmitter and/or a receiver. The audio input and output circuitry 230 can include a microphone, a speaker, a transducer, or any other audio input and output circuitry. The user interface 260 can include a keypad, buttons, a touch pad, a joystick, an additional display, or any other device useful for providing an interface between a user and an electronic device. The memory 270 may include a random access memory, a read only memory, an optical memory, a SIM, or any other memory that can be coupled to a mobile communication device.

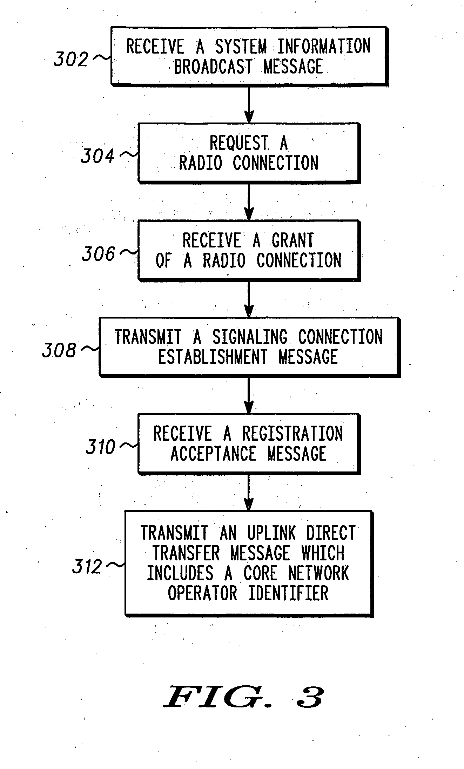

In one exemplary embodiment shown in FIG. 3, an exemplary flow diagram illustrates the message routing method of the present invention. The MS 105 receives a system information broadcast message 302. Upon receiving the system information broadcast message, the MS 105 requests a radio connection. In one exemplary embodiment, the radio connection is requested by the MS 105 transmitting a radio connection request message 304. Next the MS 105 receives a grant of the radio connection 306 by the RNC 102. A radio connection or communication link 118 has been established between the MS 105 and the base station 104. Establishing a connection between a MS 105 and a base station 104 is known to those skilled in the art and can be achieved in multiple fashions.

Next the MS 105 will use the established communication link 118 or connection to attempt to register with a core network 108. The MS 105 transmits 308 a signaling connection establishment message over the radio connection 118. The signaling connection establishment message may include a desired core network operator identifier. In response to the transmission of the signaling connection establishment message 308, the MS 105 will receive a registration accept message 310 over the radio connection 118. This message may include an assigned core network operator identifier. In response to the MS 105 receiving the registration accept message 310, the MS 105 will transmit a signaling message that includes the desired core network operator identifier, the assigned core network operator identifier or an equivalent thereof. This includes all subsequent messages to the registered core network, or non-access stratum (NAS) messages 312, all including either the desired core network operator identifier, the assigned core network operator identifier or an equivalent thereof.

In one embodiment, the desired core network operator identifier is a desired PLMNid and the assigned core network operator identifier is an assigned PLMNid. One equivalent of the core network identifier may also be a coded identifier that is equivalent to the desired core network operator identifier or the assigned core network operator identifier that is smaller in size so that less spectrum is used during transmission.

In one exemplary embodiment, the MS 105 transmits the desired core network identifier in the signaling connection establishment message to the RNC 102. In response, the MS 105 will receive the registration accept message 310 without an assigned core network operator identifier. The MS 105 will then transmit all subsequent NAS messages with the desired core network operator identifier.

In another exemplary embodiment, the MS 105 transmits the desired core network identifier in the signaling connection establishment message to the RNC 102. In response, the MS 105 will receive the registration accept message 310 with an assigned core network operator identifier. The MS 105 will then transmit all subsequent NAS messages 312 with the assigned core network operator identifier. The assigned core network operator identification may be the same as the as the desired core network operator identification.

In yet another exemplary embodiment, the MS 105 transmits the signaling connection establishment message 308 without the desired core network identifier to the RNC 102. In response, the MS 105 will receive the registration accept message 310 with an assigned core network operator identifier. The MS 105 will then transmit all subsequent NAS messages 312 with the assigned core network operator identifier. For example the MS 105 is a roaming mobile such that it does not recognize PLMN identifiers broadcast by the RAN and therefore may be assigned by the network to any of the core networks coupled with the RAN.

It is not necessary that the core networks be coupled to wireless networks such as the RAN. The network may be a wired network such as wireline, cable, or the like. Wireline devices such as home phones may access any of the many wireline operators who are all sharing the wire connection to the home.

Moving to FIG, 4, a flow diagram is shown outlining the message routing at the radio network controller (RNC). In the first step, the RNC 102 transmits a system information broadcast message 402. Once a MS 105 receives and responds to the system information broadcast message, the RNC 102 receives a radio connection request 404. Next the RNC 102 transmits a grant of the radio connection 406 to the MS 105. A radio connection or communication link 118 has been established between the MS 105 and the RNC 102 through the base station 104.

When the MS 105 attempts to register with a core network 108, the RNC 102 will receive a signaling connection establishment message 408 over the radio connection 118 from the MS 105. The signaling connection establishment message may include a desired core network operator identifier as discussed above. In response to receiving the signaling connection establishment message 408, the RNC 102 will transmit a registration accept message 410, that may be received from the registration accepting core network, over the radio connection 118. This message may include an assigned core network operator identifier. The RNC 102 will then receive all subsequent messages to the registered core network, or non-access stratum (NAS) messages 412 which include either the desired core network operator identifier, the assigned core network operator identifier or an equivalent thereof. The RNC 102 uses the included information to route the message to the identified core network.

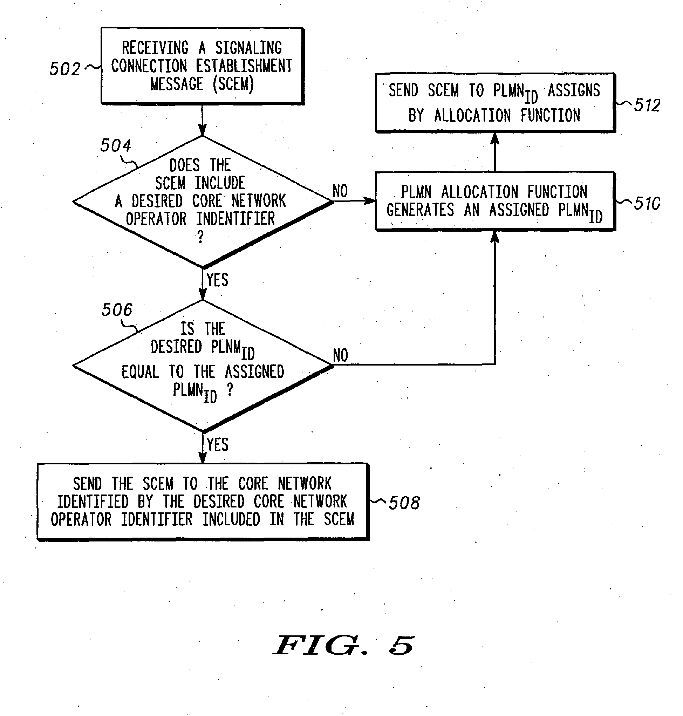

The MS 105 will transmit the signaling connection establishment message either with, or without a desired core network operator identifier. In an exemplary embodiment where the desired core network operator identifier is transmitted, the signaling connection establishment message is then routed to the desired core network by a router. The router is either in the RNC 102 and a part of the RNC 102 functionality or a separate node, which is a part of the network. For example, the router is coupled to the RNC 102 or in between the RNC 102 and the multiple core networks. FIG. 5 illustrates the routing of the signaling connection establishment message received from the MS 105. In one exemplary embodiment the RNC 102 receives the signaling connection establishment message. The RNC 102 determines that the signaling connection establishment message includes a desired core network operator identifier 504. If the signaling connection establishment message does include the desired core network operator identifier, the RNC 102 then determines 506 if the desired core network operator identifier is to be the assigned core network operator identifier. If the desired core network operator identifier is to be the assigned core network operator identifier, then the RNC 102 sends 508 the signaling connection establishment message to the identified core network.

If the desired core network operator identifier is determined not to be the assigned core network operator identifier, then the RNC 102 routes the signaling connection establishment message to the core network identified by the assigned core network operator identifier. The assigned core network operator identifier may be generated by a PLMN allocation function. The PLMN allocation function generates 510 a core network operator identifier in accordance with predetermined criteria determined by the network operators or service providers. The RNC 102 sends 512 the signaling connection establishment message to the core network associated with the PLMNid assigned and generated 510 by the allocation function.

In another exemplary embodiment, the RNC 102 receives the signaling connection establishment message and determines 504 that the signaling connection establishment message does not include a desired core network operator identifier. Then the RNC 102 executes a PLMN or core network allocation function to generate 510 and assign a PLMNid associated with a core network operator identifier. The RNC 102 will then send 512 the assigned core network operator identifier determined by the PLMN allocation function to the core network identified by the assigned core network operator identifier. The use of the RNC 102 to route the signaling connection establishment message is one example. The route determination can be determined in a separate module aside from the RNC 102 or other parts of either the RAN 106 or CN 108.

In this embodiment, the RNC 102, or RNC equivalent, which is connected to a plurality of core networks, and will select which core network to send the registration request message to with the allocation function. The allocation function, which may reside in the RNC 102, may assign the PLMNid bases on predetermined settings, by randomly selecting the core network to receive the registration request or the RNC may select the core network in a round robin manner or by the indicated domain identity such as the packet domain or circuit switched domain.

In one exemplary embodiment both the desired core network operator identifier or the assigned core network operator identifier can be correlated to a PLMN code. The PLMN code correlates to a unique PLMN identity. In one exemplary embodiment the PLMN code is shorter than the complete PLMN identifier, for example the desired core network operator identifier or the assigned core network operator identifier. This code can be assigned by the RNC 102 or the core network that is accepting the registration. In one embodiment, the PLMN code is assigned within the registration accept message. In another embodiment the PLMN code is assigned by the network when forwarding the registration accept message to the MS 105.

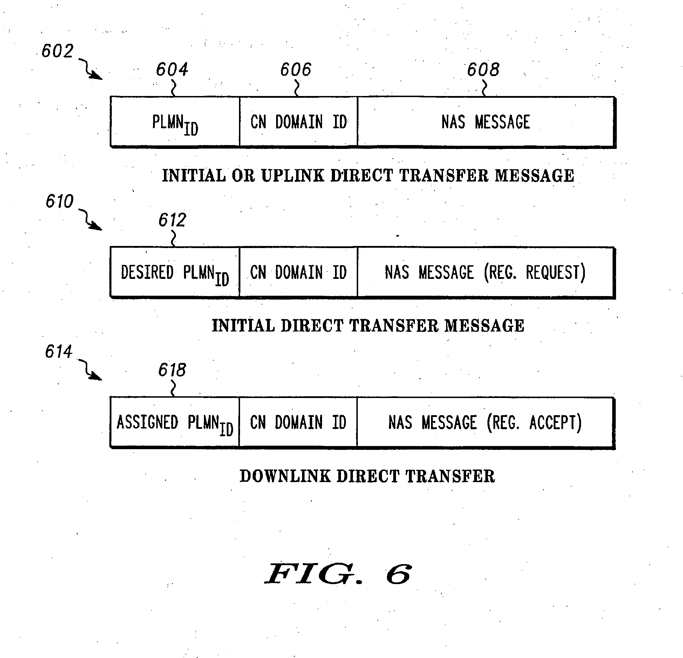

FIG. 6 illustrates code or message segments of the present invention. The communications device communicates with the core network through signaling messages. In one exemplary embodiment, the signaling message is carried in a direct transfer message. In particular FIG. 6 illustrates a direct transfer message (DTM) 602. This direct transfer message is an signaling message that may be an uplink DTM or a downlink DTM. The DTM 602 may include a PLMNid 604, a CN domain identity 606 and a NAS message 608. The PLMNid 604 includes the core network operator identifier. The CN identity 606 in one embodiment identifies whether the NAS message is a message directed towards the circuit switched domain or a packet switched domain. The PLMNid may also be a PLMN code, which is representative of the PLMNid. In one embodiment the PLMN code is shorter than the PLMNid.

In one exemplary embodiment, the DTM 610 includes the desired core network operator identifier 612. This may be a desired PLMNid in one exemplary embodiment. In this embodiment, the MS 102 is sending the DTM 610 with the desired core network operator identifier as discussed above. The RNC 102 is sending a DTM 614 with the assigned PLMNid 618 or the assigned core network operator identifier, in the registration accept message for example.

Referring back to FIG. 1, a MS 105 may register on different core network operator to obtain service on the different core network domains. For example a first core network may be capable of packet switched services and second core network may be capable of circuit switched services. The MS 105 may therefore send packet switched information to the first core network and the circuit switched information to the second core network. This may be achieved by including the appropriate PLMNid or PLMN code in the DTM along with the CN domain identity which identifies either the circuit switched or packet switched network.

While this invention has been described with specific embodiments thereof, it is evident that many alternatives, modifications, and variations will be apparent to those skilled in the art. For example, various components of the embodiments may be interchanged, added, or substituted in the other embodiments. Accordingly, the preferred embodiments of the invention as set forth herein are intended to be illustrative, not limiting. Various changes may be made without departing from the scope of the invention.

## Claims

1. A method in a communication device, comprising:
transmitting a signaling connection establishment message (308) on a radio connection, the signaling connection establishment message including a registration request message (304);
receiving a registration accept message (310) on the radio connection; and
transmitting an uplink signaling message on the radio connection (312), the uplink signaling message including a core network operator identifier, **characterized in that** the uplink signaling message comprises a non-access stratum, NAS, signaling message and wherein the uplink signaling message includes a domain identity and wherein the domain identity comprises at least one of a packet switched domain indicator and a circuit switched domain indicator.

2. The method according to claim 1, wherein the signaling connection establishment message comprises an initial core network signaling message.

3. The method according to claim 1, wherein the registration request message includes a desired core network operator identifier.

4. The method according to claim 1, wherein the registration accept message includes an assigned core network operator identifier.

5. The method according to claim 1, wherein the core network operator identifier comprises a public land mobile network identity including a mobile country code and a mobile network code.

6. The method according to claim 1, wherein the communication device is a mobile communication device (105)

7. A mobile communication device (105), comprising:
a transceiver (250);
a controller (220) coupled to the transceiver (250), the controller (220) configured to control the operations of the mobile communication device (105); and a signaling message module (280) coupled to the controller (220), the signaling message module (280) configured to transmit a signaling connection establishment message on a radio connection, the signaling connection establishment message including a registration request message, receive a registration accept message on the radio connection, and transmit an uplink signaling message on the radio connection, the uplink signaling message including a core network operator identifier
**characterized in that** the uplink signaling message comprises a non-access stratum signaling message and a domain identity, the domain identity comprising at least one of a packet switched domain indicator and a circuit switched domain indicator.

8. The mobile communication device according to claim 7, wherein the signaling connection establishment message comprises an initial core network signaling message.

## Patentansprüche

1. Verfahren in einer Kommunikationseinrichtung, aufweisend:
Übertragen einer Signalverbindungsherstellnachricht (308) durch eine Funkverbindung, wobei die Signalverbindungsherstellnachricht eine Registrierungsanfragenachricht (304) enthält;
Empfangen einer Registrierungsannahmenachricht (310) durch die Funkverbindung; und
Übertragen einer Uplink-Signalnachricht durch die Radioverbindung (312), wobei die Uplink-Signalnachricht einen Kernnetzwerkbetreiberidentifikator enthält,
**dadurch gekennzeichnet, dass** die Uplink-Signalnachricht eine Non-Access-Stratum-Signalnachricht, NAS, aufweist, und wobei die Uplink-Signalnachricht eine Domain-Identität enthält und wobei die Domain-Identität zumindest eines von einem paketvermittelten Domain-Indikator und einem leitungsvermittelten Domain-Indikator aufweist.

2. Verfahren nach Anspruch 1, wobei die Signalverbindungsherstellnachricht eine Initialkernnetzwerksignalnachricht aufweist.

3. Verfahren nach Anspruch 1, wobei die Registrierungsanfragenachricht einen Wunschkernnetzwerkbetreiberidentifikator enthält.

4. Verfahren nach Anspruch 1, wobei die Registrierungsannahmenachricht einen Betreiberidentifikator für das zugewiesene Kernnetzwerk enthält.

5. Verfahren nach Anspruch 1, wobei der Kernnetzwerkbetreiberidentifikator eine Public-Land-Mobile-Network-Identität einschließlich eines Mobile Country Code und eines Mobile Network Code aufweist.

6. Verfahren nach Anspruch 1, wobei die Kommunikationseinrichtung eine mobile Kommunikationseinrichtung (105) ist.

7. Mobile Kommunikationseinrichtung (105), aufweisend:
einen Sendeempfänger (250);
eine Steuerung (220), die mit dem Sendeempfänger (250) verbunden ist, wobei die Steuerung (220) so konfiguriert ist, dass sie den Betrieb der mobilen Kommunikationseinrichtung (105) steuert; und ein Signalnachrichtenmodul (280), das mit der Steuerung (220) verbunden ist, wobei das Signalnachrichtenmodul (280) so konfiguriert ist, dass es eine Signalverbindungsherstellnachricht durch eine Funkverbindung überträgt, wobei die Signalverbindungsherstellnachricht eine Registrierungsanfragenachricht enthält, eine Registrierungsannahmenachricht durch die Funkverbindung empfängt, und eine Uplink-Signalnachricht durch die Funkverbindung überträgt, wobei die Uplink-Signalnachricht einen Kernnetzwerkbetreiberidentifikator enthält;
**dadurch gekennzeichnet, dass** die Uplink-Signalnachricht eine Non-Access-Stratum-Signalnachricht und eine Domain Identität aufweist, wobei die Domain-Identität zumindest eines von einem paketvermittelten Domain-Indikator und einem leitungsvermittelten Domain-Indikator aufweist.

8. Mobile Kommunikationseinrichtung nach Anspruch 7, wobei die Signalverbindungsherstellnachricht eine Initialkernnetzwerksignalnachricht aufweist.

## Revendications

1. Procédé dans un dispositif de communication, comprenant :
la transmission d'un message d'établissement de liaison de signalisation (308) sur une liaison radio, le message d'établissement de liaison de signalisation comprenant un message de demande d'enregistrement (304) ;
la réception d'un message d'acceptation d'enregistrement (310) sur la liaison radio ; et
la transmission d'un message de signalisation de liaison montante sur la liaison radio (312), le message de signalisation de liaison montante comprenant un identifiant d'opérateur de réseau central,
**caractérisé en ce que** le message de signalisation de liaison montante comprend un message de signalisation de strate sans accès, NAS, et dans lequel le message de signalisation de liaison montante comprend une identité de domaine et dans lequel l'identité de domaine comprend au moins l'un d'un indicateur de domaine à commutation de paquets et d'un indicateur de domaine à commutation de circuits.

2. Procédé selon la revendication 1, dans lequel le message d'établissement de liaison de signalisation comprend un message de signalisation de réseau central initial.

3. Procédé selon la revendication 1, dans lequel le message de demande d'enregistrement comprend un identifiant d'opérateur de réseau central souhaité.

4. Procédé selon la revendication 1, dans lequel le message d'acceptation d'enregistrement comprend un identifiant d'opérateur de réseau central attribué.

5. Procédé selon la revendication 1, dans lequel l'identifiant d'opérateur de réseau central comprend une identité de réseau mobile terrestre public comprenant un code de pays mobile et un code de réseau mobile.

6. Procédé selon la revendication 1, dans lequel le dispositif de communication est un dispositif de communication mobile (105).

7. Dispositif de communication mobile (105), comprenant :
un émetteur-récepteur (250) ;
un organe de commande (220) couplé à l'émetteur-récepteur (250), l'organe de commande (220) étant configuré pour commander les opérations du dispositif de communication mobile (105) ; et
un module de message de signalisation (280) couplé à l'organe de commande (220), le module de message de signalisation (280) étant configuré pour transmettre un message d'établissement de liaison de signalisation sur une liaison radio, le message d'établissement de liaison de signalisation comprenant un message de demande d'enregistrement, recevoir un message d'acceptation d'enregistrement sur la liaison radio, et transmettre un message de signalisation de liaison montante sur la liaison radio, le message de signalisation de liaison montante comprenant un identifiant d'opérateur de réseau central,
**caractérisé en ce que** le message de signalisation de liaison montante comprend un message de signalisation de strate sans accès et une identité de domaine, l'identité de domaine comprenant au moins l'un d'un indicateur de domaine à commutation de paquets et d'un indicateur de domaine à commutation de circuits.

8. Dispositif de communication mobile selon la revendication 7, dans lequel le message d'établissement de liaison de signalisation comprend un message de signalisation de réseau central initial.
